# EUROPÄISCHE PATENTSCHRIFT

(11) **EP 1 455 434 B1**
(45) Veröffentlichungstag und Bekanntmachung des Hinweises auf die Patenterteilung: **01.03.2006**
(21) Anmeldenummer: 03004595.9
(22) Anmeldetag: 01.03.2003
(51) Int. Cl.: H02K 5/16

(54) **Elektromotor**
Electric motor
Moteur électrique

(43) Veröffentlichungstag der Anmeldung: 08.09.2004
(73) Patentinhaber: GEBHARDT VENTILATOREN GMBH & CO., D-74638 Waldenburg (DE)
(72) Erfinder: Anschütz, Johannes Dr. Ing., 69121 Heidelberg (DE); Paul, Mathias, 08541 Grossfriesen (DE)
(74) Vertreter: Vetter, Hans

(56) Entgegenhaltungen:
- DE-A- 4 004 812
- DE-A- 19 631 988
- DE-U- 8 029 066
- US-A- 4 634 908
- PATENT ABSTRACTS OF JAPAN vol. 2000, no. 09, 13. Oktober 2000 (2000-10-13) -& JP 2000 156952 A (MITSUBISHI ELECTRIC CORP), 6. Juni 2000 (2000-06-06)
- PATENT ABSTRACTS OF JAPAN vol. 2000, no. 12, 3. Januar 2001 (2001-01-03) -& JP 2000 245100 A (DENYO CO LTD), 8. September 2000 (2000-09-08)
- PATENT ABSTRACTS OF JAPAN vol. 1999, no. 02, 26. Februar 1999 (1999-02-26) -& JP 10 295069 A (HITACHI LTD;HITACHI TAGA ENG LTD), 4. November 1998 (1998-11-04)

## Beschreibung

Die Erfindung betrifft einen Elektromotor mit einem Stator und einem Rotor, der mittels einer Lageranordnung im oder am Stator drehbar gelagert ist.

Wird ein derartiger Elektromotor mit einem Frequenzumrichter oder einer EC-Ansteuerelektronik, also mit einer Wechselspannung höherer Puls- oder Schaltfrequenz betrieben, so werden die Lager des Elektromotors weit höher belastet, als dies beim direkten Netzanschluss bei 50 Hz der Fall ist. Dabei ist es oft sehr schwierig, die Höhe der zusätzlichen Belastung im Vorfeld abzuschätzen und die geeigneten Vorkehrungen zu treffen. Die schaltende Arbeitsweise von EC-Ansteuergeräten oder Frequenzumformern bzw. -umrichtern führt zu kapazitiven Ladungsverschiebungen innerhalb des Motors, was wiederum als treibende Kraft der Arbeitsströme zwischen Rotor und Stator zu sehen ist. Amplitude und Zeitverhalten der durch die Lager fließenden Ableitströme unterliegen vielfältigen Einflussfaktoren, sodass der reduzierende Einfluss auf die Lagerlebensdauer schwer quantifiziert werden kann.

Aufgrund der geometrischen Verhältnisse sind dabei Außenläufermotoren stärker gefährdet als Innenläufermotoren. Außenläufermotoren eignen sich besonders für den Einsatz in Ventilatoren, als Direktantrieb von Fahrzeugen, in Startergeneratoren oder in stufenlosen Getriebekonzepten.

Es sind mehrere, unterschiedlich wirksame Möglichkeiten bekannt, die Belastungen der Lager zu reduzieren. Beispielsweise lassen sich durch angepasste, allpolige Sinusfilter im Frequenzumrichter sinusförmige Ausgangsspannungen erzeugen, wodurch dem Netzbetrieb vergleichbare Bedingungen geschaffen werden können. In jüngster Zeit sind auch Umrichter mit integrierten aktiven Sinusausgangsfiltern auf dem Markt erhältlich. Hier treten dieselben Nachteile auf.

Es ist auch schon vorgeschlagen worden, anstelle der einfachen Ganzstahllager Hybridlager zu verwenden, jedoch sind diese im Vergleich zu Ganzstahllagern äußerst kostenintensiv.

Aus der JP 2000156952 oder DE 19631988 sind bereits Elektromotoren bekannt, bei denen eine die Lageranordnung gegen den Stator elektrisch isolierende Hülse vorgesehen ist, um die eingangs genannten Probleme zu lösen. Nachteilig an solchen Hülsen ist die relativ geringe Festigkeit und ein sich ausbildendes Spiel. Es ist allerdings auch bekannt, anstelle der isolierenden Hülse eine Kunststoffschicht vorzusehen, um diese höhere Festigkeit zu erreichen. Dabei ist es jedoch schwierig, bei einer solchen Kunststoffschicht ohne aufwändige zusätzliche Maßnahmen eine exakte Zentrierung zu erreichen.

Auch aus der DE 4004812 ist eine isolierte Ankerwelle für einen Elektromotor bekannt, wobei das Ankerblechpaket gegenüber der Rotorwelle mittels einer aus Isolierstoff bestehenden Hülse oder mit einer unmittelbar auf die Welle aufgebrachten Schicht aus Kunststoff isoliert ist. Hierbei treten dieselben bereits geschilderten Nachteile auf.

Die Aufgabe der vorliegenden Erfindung besteht darin, einen Elektromotor mit elektrisch gegenüber dem stator isoliertem Rotor zu schaffen, wobei eine leicht zu zentrierende und dabei sehr feste Isolierung erzielt werden soll.

Diese Aufgabe wird erfindungsgemäß durch einen Elektromotor mit den Merkmalen des Anspruches 1 oder des Anspruches 3 gelöst.

Die Verwendung solcher elektrisch isolierender Hülsen stellt zum einen eine sehr kostengünstige Lösung dar, durch die die Beanspruchung der Lager durch Ableitströme vollständig vermieden werden kann, und zum anderen tritt auch kein erhöhter Arbeitsaufwand bei der Herstellung auf, da die Lager üblicherweise ohnehin nicht direkt in die gegossenen Lagerausnehmungen bzw. Lagerschilder eingesetzt werden, sondern diese werden zunächst zur Aufnahme der Lager bearbeitet oder es werden Stahlbuchsen eingesetzt, die in der Folge einer genauen Bearbeitung für den erforderlichen Lagersitz unterzogen werden. Diese Stahlbuchsen werden erfindungsgemäß durch isolierende Kunststoffbuchsen bzw. -hülsen ersetzt. Dasselbe gilt für die Isolierhülse zwischen Rotorwelle und Rotor. Auch dort dient die isolierende Hülse zum einen zur Zentrierung des Rotortopfes auf der Welle und zum anderen zur elektrischen Isolierung.

Bei einer Ausführung, bei der sich die Hülse nur teilweise zwischen der Rotorwelle und dem Rohrstück bzw. Innenwandung der Bohrung erstreckt, wird der übrige Zwischenraum durch ein isolierendes Kunststoffmaterial ausgefüllt, insbesondere durch einen Klebstoff oder ein Harz. Die kurze Hülse ist nur zur Zentrierung erforderlich und dichtet den Zwischenraum für den Kleber ab. Hierdurch können höhere Festigkeiten gegen axiale Kräfte erzielt werden. Selbstverständlich kann bei einer längeren Hülse ebenfalls ein dünner Kleberauftrag zur Erhöhung der Festigkeit beitragen oder eine Hülse kann ganz entfallen,
wobei dann andere Zentriermaßnahmen während dem Ausfüllen und Aushärten des Kunststoffmaterials erforderlich sind.

Im Falle eines Außenläufermotors ist der Rotor mittels an entgegengesetzten Seiten seines Rotorgehäuses angeordneten Lagern der Lageranordnung an der sich durch ihn hindurch erstreckenden Statorachse gelagert, wobei die die Lager umgreifenden isolierenden Hülsen sich jeweils nur teilweise zwischen Lager und einer entsprechenden Lagerausnehmung oder -aufnahme erstrecken, wobei der übrige Zwischenraum durch ein isolierendes Kunststoffmaterial ausgefüllt ist. Hierbei treten ebenfalls die bereits beschriebenen Vorteile auf.

Durch die in den Unteransprüchen aufgeführten Maßnahmen sind vorteilhafte Weiterbildungen und Verbesserungen des im Anspruch 1 oder Anspruch 3 angegebenen Elektromotors möglich.

Ausführungsbeispiele der Erfindung sind in der Zeichnung dargestellt und in der nachfolgenden Beschreibung näher erläutert. Es zeigen:
- Fig. 1: ein erstes Ausführungsbeispiel mit einem Elektromotor in Flanschbauweise mit einer isolierenden Hülse zwischen einem Rohrstück des Rotors und der Rotorwelle,
- Fig. 2: eine alternative Ausgestaltung dieser Hülse zwischen Rohrstück und Rotorwelle und
- Fig. 3: einen Elektromotor in Wellenbauweise mit durch Hülsen isolierten Lagern.

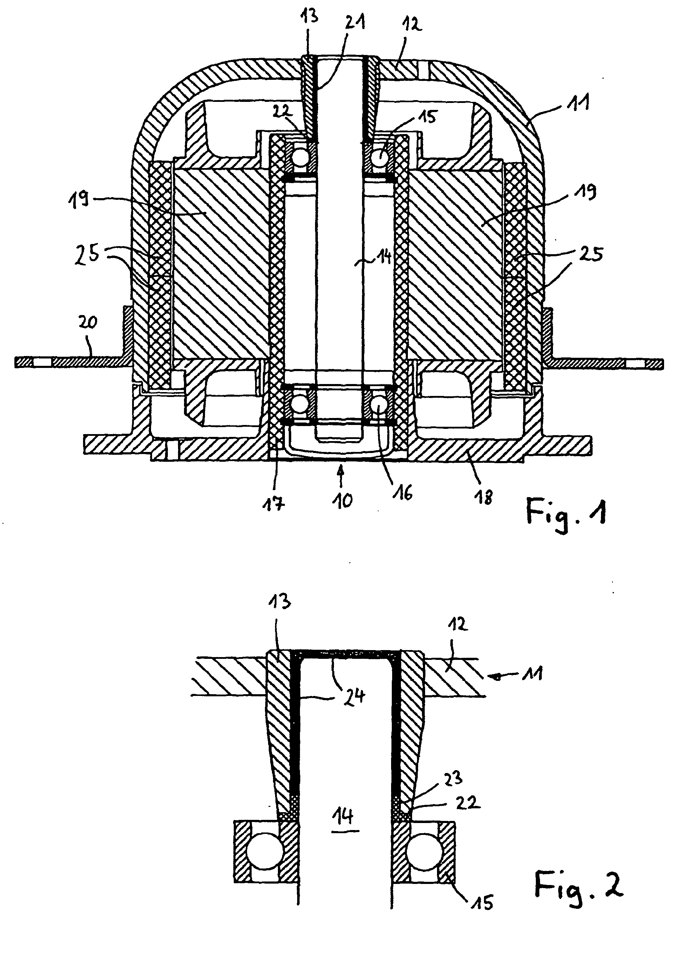

Der in Fig. 1 dargestellte Elektromotor ist ein Außenläufermotor in Flanschbauweise. Er besitzt einen glockenförmigen, den Stator 10 umgreifenden Rotor 11, wobei im Boden 12 des Rotors 11 ein Rohrstück 13 zur Aufnahme der Rotorwelle 14 fixiert ist. Diese Rotorwelle 14 ist mittels zweier Lager in einem Achsrohr 17 des Stators 10 drehbar gelagert. Das Achsrohr 17 mündet mit seinem vom Rohrstück 13 entfernten Ende in einem Flansch 18, der zur Fixierung des Elektromotors dient. Weiterhin trägt das Achsrohr 17 die Statorpole 19. An der Innenseite des Rotors 11 sind den Statorpolen 19 gegenüberstehend Permanentmagnete 25 angebracht. An der Außenseite des Rotors 11 ist ein Flansch 20 fixiert, an dem nicht dargestellte Rotorblätter eines Gebläses oder ein Gebläserad befestigt werden können.

Ein Rohrstück 13 kann z.B. dann entfallen, wenn der Rotor 11 an der entsprechenden Stelle eine große Wandstärke oder Verdickung besitzt. Anstelle des Rohrstücks tritt dann eine konzentrische Bohrung im Rotor 11.

Ist der Elektromotor nicht als EC-Motor sondern als Asynchronmotor ausgebildet, dann tritt an Stelle der Permanentmagnete 25 eine Kurzschlussläuferanordnung.

Um die Rotorwelle 14 gegenüber dem glockenförmigen Rotor 11 elektrisch zu isolieren, ist eine Buchse oder Hülse 21 aus isolierendem Kunststoff zwischen der Innenfläche des Rohrstücks 13 und der entsprechenden Außenfläche der Rotorwelle 14 angeordnet. Diese Hülse 21 besitzt an ihrem lagerseitigen Ende eine radiale Erweiterung 22, um das Rohrstück 13 auch gegenüber dem Lager 15 elektrisch zu isolieren. Anstelle der radialen Erweiterung 22 könnte auch eine entsprechende isolierende Scheibe treten. Zur Erhöhung der Festigkeit kann die Hülse 21 mittels eines dünnen Kleberauftrags im Rohrstück 13 bzw. an der Rotorwelle 14 fixiert sein. Die Anbringung dieser Hülse 21 stellt gegenüber herkömmlichen Anordnungen keinen zusätzlichen Arbeitsgang dar, da bisher schon zur exakten Fixierung der Rotorwelle 14 relativ zum Rotor 11 metallische Hülsen oder Buchsen eingesetzt worden sind.

Die elektrische Isolierung des Rotors 11 mittels der Hülse 21 dient zur Verhinderung von Ableitströmen zwischen Rotor und Stator, die insbesondere beim Betrieb durch Frequenzumrichter oder elekronischen EC-Ansteuergeräten mit einer Wechselspannung höherer Puls- oder Schaltfrequenz auftreten. Diese Ströme bedeuten eine Gefahr für die Lebensdauer der Lager zwischen Rotor und Stator.

In Fig. 2 ist eine Ausführungsvariante der Isolierung zwischen Rotorwelle 14 und Rotor 11 in einer Detailansicht dargestellt. Hier ist eine gegenüber Fig. 1 stark verkürzte isolierende Buchse oder Hülse 23 vorgesehen, die am lagerseitigen Endbereich des Rohrstücks 13 angeordnet ist und ebenfalls eine radiale Erweiterung 22 zur Isolierung gegenüber dem Lager 15 besitzt. Sie dient lediglich zur Vorzentrierung. Anschließend wird der übrige Zwischenraum zwischen Rohrstück 13 und Rotorwelle 14 mit einer Kunststoffmasse oder einem Kleber 24 oder einem Harz ausgegossen. Die Hülse 23 dient dabei zur Abdichtung gegenüber dem Kleber 24. Im Ausführungsbeispiel ist zusätzlich noch die Stirnseite der Rotorwelle 14 mit Kleber 24 überzogen, was nicht unbedingt erforderlich ist.

Eine Hülse 21 bzw. 23 kann in einer alternativen Ausgestaltung auch ganz entfallen. Beim Ausgießen oder Ausfüllen des Zwischenraums zwischen Rotorwelle 14 und Rohrstück 13 bzw. konzentrischer Bohrung durch den Rotor mit Kunststoffmaterial muss die exakte Zentrierung durch andere Maßnahmen sichergestellt sein bis das Kunststoffmaterial ausgehärtet ist.

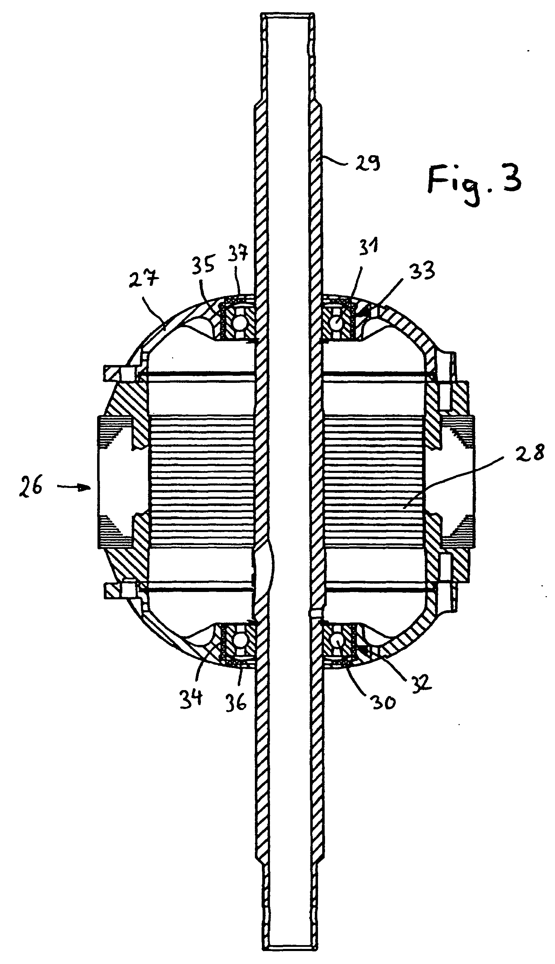

Der in Fig. 3 als Ausführungsbeispiel der Erfindung dargestellte Elektromotor ist ein Außenläufermotor in Wellenbauweise. Der Rotor 26 besitzt ein Rotorgehäuse 27, das den innenliegenden Stator 28 aufnimmt. Der Stator 28 ist an einer Statorachse 29 fixiert, die sich durch das Rotorgehäuse 27 hindurch erstreckt. Dieses ist an entgegengesetzten Stellen an der Statorachse 29 durch zwei Lager 30, 31 gelagert. Diese Lager sitzen in Lagerschildern bzw. Lagerausnehmungen 32, 33 des gegossenen Rotorgehäuses 27.

Zur elektrischen Isolierung zwischen Rotor 26 und Stator 28 sind isolierende Buchsen oder Hülsen 34, 35 zwischen den Umfangsflächen der Lager 30, 31 und den entsprechenden Gegenflächen der Lagerausnehmungen 32, 33 eingesetzt. Sie dienen anstelle der sonst üblichen Stahlhülsen der Sicherstellung der exakten Lagersitze der Lager 30, 31 und zusätzlich zur elektrischen Isolierung. Zwischen den jeweils nach außen weisenden Stirnseiten der Lager 30, 31 und den entsprechenden Gegenflächen der Lagerausnehmungen 32, 33 sind isolierende Lochscheiben 36, 37 aus Kunststoff eingesetzt. Sie dienen ebenfalls zur elektrischen Isolierung der Lager 30, 31 gegenüber dem Rotorgehäuse 27.

Die Hülsen 34, 35 und/oder die Lochscheiben 36, 37 können zur Erhöhung der Festigkeit mittels einer Klebstoffschicht fixiert sein, wie dies schon beim ersten Ausführungsbeispiel der Fall war.

Der Elektromotor gemäß Figur 3 kann in einer alternativen Ausgestaltung auch als Innenläufermotor ausgebildet sein, d.h. Stator und Rotor sind vertauscht und anstelle der Statorachse tritt eine Rotorwelle.

In Abwandlung der dargestellten Ausführungsbeispiele können beim ersten Ausführungsbeispiel gemäß Fig. 1 ebenfalls die Lager 15, 16 gemäß dem in Fig. 3 dargestellten Ausführungsbeispiel isoliert sein. Weiterhin könnte prinzipiell beim in Fig. 3 dargestellten Ausführungsbeispiel alternativ zur dargestellten und beschriebenen elektrischen Isolierung eine isolierende Hülse und/oder ein Kunststoffmaterial zwischen der Statorachse 29 und dem Stator 28 in Anlehnung an das erste Ausführungsbeispiel angeordnet sein.

## Patentansprüche

1. Elektromotor mit einem Stator (10) und einem Rotor (11), der mittels einer Lageranordnung (15, 16) im oder am Stator (10) drehbar gelagert ist, wobei eine die Rotorwelle (14) gegenüber dem Rotor (11) elektrisch isolierende Hülse (21, 23) und/oder Kunststoffschicht (24) vorgesehen ist, **dadurch gekennzeichnet, dass** die im Stator (10) gelagerte Rotorwelle (14) an einem Endbereich über die isolierende Hülse (21, 23) und die Kunststoffschicht (24) mit dem glockenförmigen, den Stator (10) umgreifenden Rotor (11) verbunden ist, dass die Hülse (21; 23) wenigstens teilweise zwischen der Rotorwelle (14) und einem mit dem Rotor (11) fest verbundenen konzentrischen Rohrstück (13) oder der Innenwandung einer konzentrischen Bohrung im Rotor (11) angeordnet ist, und dass sich die Hülse (23) nur teilweise zwischen der Rotorwelle (14) und dem Rohrstück (13) oder der Innenwandung der Bohrung erstreckt, wobei der übrige Zwischenraum durch ein isolierendes Kunststoffmaterial (24) ausgefüllt ist.

2. Elektromotor nach Anspruch 1, **dadurch gekennzeichnet, dass** sich ein Bereich (22) der Hülse (21, 23) oder eine isolierende Scheibe zwischen einer Stirnseite des Rohrstücks (13) und einem Lager (15) der Lageranordnung (15, 16) erstreckt, insbesondere in radialer Richtung.

3. Elektromotor mit einem Stator (28) und einem Rotor (26), der mittels einer Lageranordnung (30, 31) im oder am Stator (28) drehbar gelagert ist, wobei wenigstens eine die Lageranordnung (30, 31) gegenüber dem Stator oder Rotor (26) elektrisch isolierende Hülse (34, 35) und/oder Kunststoffschicht vorgesehen ist, **dadurch gekennzeichnet, dass** der Rotor (26) mittels an entgegengesetzten Seiten seines Rotorgehäuses (27) angeordneten Lagern der Lageranordnung (30, 31)) an der sich durch ihn hindurch erstreckenden Statorachse (29) gelagert ist, wobei die die Lager umgreifenden isolierenden Hülsen (34, 35) sich jeweils nur teilweise zwischen Lager (30, 31) und einer entsprechenden Lagerausnehmung oder -aufnahme (32, 33) erstrecken, wobei der übrigen Zwischenraum durch ein isolierendes Kunststoffmaterial ausgefüllt ist.

4. Elektromotor nach Anspruch 3, **dadurch gekennzeichnet, dass** isolierende Scheiben (36, 37) zwischen Stirnseiten der Lager (30, 31) und den Lagerausnehmungen oder -aufnahmen (32, 33) angeordnet sind, die als separate Isolierelemente ausgebildet oder an den Hülsen (33, 35) angeformt sind.

5. Elektromotor nach einem der vorhergehenden Ansprüche, **dadurch gekennzeichnet, dass** die Hülsen (21, 23; 34, 35) als Kunststoffhülsen ausgebildet sind.

6. Elektromotor nach einem der vorhergehenden Ansprüche, **dadurch gekennzeichnet, dass** das Kunststoffmaterial ein Klebstoff oder Harz ist.

## Revendications

1. Moteur électrique avec un stator (10) et un rotor (11) qui est monté tournant dans ou sur le stator (10), au moyen d'un agencement de paliers (15,16), un manchon (21, 23), isolant électriquement l'arbre de rotor (14) par rapport au rotor (11), et/ou une couche de matière plastique (24) étant prévu, **caractérisé en ce que** l'arbre de rotor (14), monté dans le stator (10), est relié dans une zone d'extrémité, par le manchon isolant (21, 23) et la couche de matière plastique (23), au rotor (11) en forme de cloche, entourant le stator (10), **en ce que** le manchon (21 ; 23) est disposé au moins en partie entre l'arbre de rotor (14) et une pièce tubulaire (13) concentrique, solidaire du rotor (11), ou la paroi intérieure d'un perçage concentrique dans le rotor (11), et **en ce que** le manchon (23) ne s'étend qu'en partie entre l'arbre de rotor (14) et la pièce tubulaire (13) ou la paroi intérieure du perçage, le reste de l'interstice étant rempli par une matière plastique (24) isolante.

2. Moteur électrique selon la revendication 1, **caractérisé en ce qu'**une zone (22) du manchon (21, 23) ou une rondelle isolante s'étend entre une face frontale de la pièce tubulaire (13) et un palier (15) de l'agencement de paliers (15, 16), en particulier dans la direction radiale.

3. Moteur électrique avec un stator (28) et un rotor (26) qui est monté tournant dans ou sur le stator (28), au moyen d'un agencement de paliers (30, 31), au moins un manchon (34, 35), isolant électriquement l'agencement de paliers (30, 31) par rapport au stator ou au rotor (26), et/ou une couche de matière plastique étant prévu, **caractérisé en ce que** le rotor (26) est monté, au moyen de paliers de l'agencement de paliers (30, 31), disposés sur des faces opposées de son boîtier de rotor (27), sur l'axe de stator (29) s'étendant à travers celui-ci, les manchons isolants (34, 35), entourant les paliers, s'étendant chacun en partie seulement entre les paliers (30, 31) et un évidement ou logement de palier (32, 33) correspondant, le reste de l'interstice étant rempli par une matière plastique isolante.

4. Moteur électrique selon la revendication 3, **caractérisé en ce que** les rondelles isolantes (36, 37) sont disposées entre des faces frontales des paliers (30, 31) et les évidements ou logements de palier (32, 33) qui sont réalisés en tant qu'éléments isolants séparés ou formés sur les manchons (33, 35).

5. Moteur électrique selon l'une des revendications précédentes, **caractérisé en ce que** les manchons (21, 23 ; 34, 35) sont réalisés sous la forme de manchons en matière plastique.

6. Moteur électrique selon l'une des revendications précédentes, **caractérisé en ce que** la matière plastique est une colle ou une résine.

## Claims

1. Electric motor with a stator (10) and a rotor (11) rotatably mounted in or on the stator (10) by means of a bearing arrangement (15, 16), wherein a sleeve (21, 23) and/or a plastic layer (24) is provided for the electric insulation of the rotor shaft (14) against the rotor (11), **characterised in that** an end section of the rotor shaft (14) bearing-mounted in the stator (10) is connected to the bell-shaped rotor (11) encompassing the stator (10) by the insulating sleeve (21, 23) and the plastic layer (24), **in that** the sleeve (21, 23) is located at least partially between the rotor shaft (14) and a tube section (13) permanently connected to the rotor (11) or the inner wall of a concentric bore in the rotor (11), and **in that** the sleeve (23) extends only partially between the rotor shaft (14) and the tube section (13) or the inner wall of the bore, the remaining space being filled by an insulating plastic material (24).

2. Electric motor according to claim 1, **characterised in that** an area (22) of the sleeve (21, 23) or an insulating washer extends, in particular in the radial direction, between an end face of the tube section (13) and a bearing (15) of the bearing arrangement (15, 16).

3. Electric motor with a stator (28) and a rotor (26) rotatably mounted in or on the stator (28) by means of a bearing arrangement (30, 31), wherein at least one sleeve (34, 35) and/or a plastic layer is provided for the electric insulation of the bearing arrangement (30, 31) against the stator or rotor (26), **characterised in that** the rotor (26) is bearing-mounted on the stator axis (29) extending through it by means of bearings of the bearing arrangement (30, 31) located on opposite sides of the rotor housing (27), wherein the insulating sleeves (34, 35) encompassing the bearings extend only partially between a bearing (30, 31) and a corresponding bearing recess or bearing location (32, 33), the remaining space being filled by an insulating plastic material.

4. Electric motor according to claim 3, **characterised in that** insulating washers (36, 37) designed as separate insulating elements or integrated with the sleeves (33, 35) are located between the end faces of the bearings (30, 31) and the bearing recesses or bearing locations.

5. Electric motor according to any of the preceding claims, **characterised in that** the sleeves (21, 23; 34, 35) are designed as plastic sleeves.

6. Electric motor according to any of the preceding claims, **characterised in that** the plastic material is an adhesive or resin.
